# EUROPEAN PATENT APPLICATION

(11) **EP 4 362 414 A1**
(43) Date of publication of application: **01.05.2024**
(21) Application number: 22203810.1
(22) Date of filing: 26.10.2022
(51) Int. Cl.: H04L 41/5051, H04L 41/0895, H04L 41/12, H04L 41/40

(54) **COMMUNICATION SYSTEM AND METHOD FOR PROVIDING A SERVICE WITH MOVABLE RESOURCES**

(71) Applicant: NTT DOCOMO, INC., Chiyoda-Ku Tokyo 100-6150 (JP)
(72) Inventor: HIGO, Naoki, 80687 Munich (DE); TRIAY MARQUES, Joan, 80687 Munich (DE); HATANAKA, Yoshitaka, Tokyo, 100-6150 (JP); KONO, Tomoki, Tokyo, 100-6150 (JP)
(74) Representative: Viering, Jentschura & Partner mbB Patent- und Rechtsanwälte

(57) **Abstract**

According to one embodiment, a communication system is described comprising a resource information provision component configured to provide resource availability information including information about one or more locations at which hardware resources are temporarily available and about one or more time periods for which the hardware resources are available at the locations, a service provision component for provision of a service, configured to indicate a requirement for one or more network functions for provision of the service, wherein the requirement comprises a location at which the one or more network functions should be provided and a time period during which the one or more network functions should be provided and a resource management component configured to determine, among the hardware resources, suitable hardware resources for the provision of the one or more network functions.

## Description

The present disclosure relates to communication systems and methods for providing a service with movable (and thus dynamic) resources.

With concepts like network function virtualization the provision of (e.g. communication) services becomes more and more flexible with respect to the hardware resources used for providing the services. At the same time, powerful hardware resources are becoming widely deployed like for example in vehicles for providing driver assistance functions (or even autonomous driving). Since these hardware resources are often unused (when the vehicles are not used for driving, which is the case for long periods, e.g. overnight) approaches to use these resources for providing services when they are available for this purpose are desirable.

According to one embodiment, a communication system is provided comprising a resource information provision component configured to provide resource availability information including information about one or more locations at which hardware resources are temporarily available and about one or more time periods for which the hardware resources are available at the locations, a service provision component for provision of a service (e.g. a communication service but possibly also a data processing service such as any kind of software application), configured to indicate a requirement for one or more network functions for provision of the service, wherein the requirement comprises a location at which the one or more network functions should be provided and a time period during which the one or more network functions should be provided and a resource management component configured to determine, among the hardware resources, hardware resources for the provision of the one or more network functions such that the indicated requirement for the one or more network functions can be fulfilled by providing the one or more network functions using the determined hardware resources and to initiate provision of the one or more network functions using the determined hardware resources.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a communication system, in particular the management framework for communication resources of the communication system.
Figure 2 illustrates the usage of vehicles of a car rental company as a cloud of resources by a MANO (Management and orchestration system).
Figure 3 illustrates the usage of vehicles 301 of individual owners as a cloud of resources by a MANO.
Figure 4 illustrates time-varying resource management according to an embodiment.
Figure 5 shows a communication system according to an embodiment.
Figure 6 shows a flow diagram illustrating a method for providing a service.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

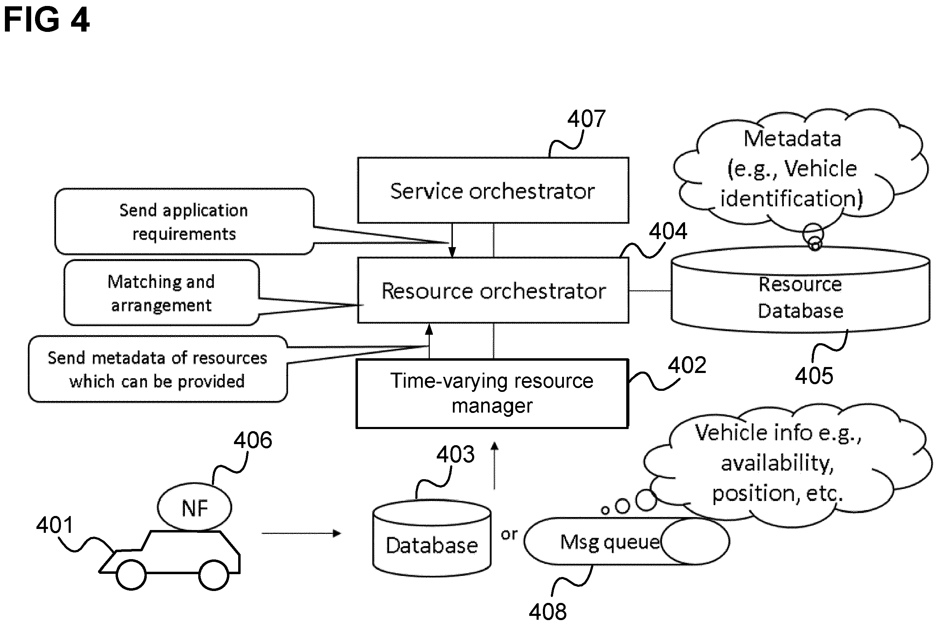

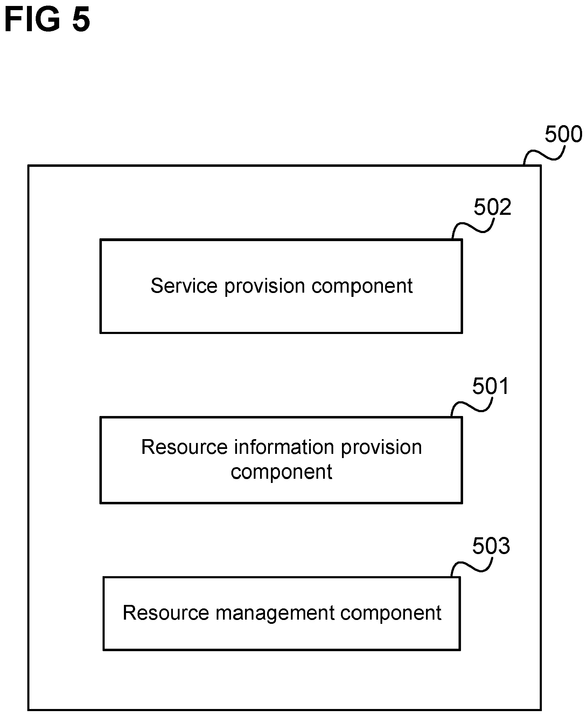

Various examples corresponding to aspects of this disclosure are described below:
Example 1 is a communication system as described below with reference to figure 4.
Example 2 is the communication system of example 1, wherein the one or more network functions comprise at least one of a core network function, an edge network function and a radio network function.
Example 3 is the communication system of example 1 or 2, wherein the resource management component is configured to at least partially forward the resource availability information to the service provision component and the service provision component is configured to determine the requirement such that it can be fulfilled by providing the one or more network functions using the hardware resources.
Example 4 is the communication system of example 3, wherein the resource management component is configured to remove confidential information from the resource availability information and forward the remainder of the resource availability information to the service provision component.
Example 5 is the communication system of example 3 or 4, wherein the resource management component is configured to at least partially abstract the resource availability information and forward the abstracted resource availability information to the service provision component.
Example 6 is the communication system of example 5, wherein abstracting the resource availability information comprises making the information about the locations less accurate.
Example 7 is the communication system of any one of examples 3 to 6, wherein the resource management component is configured to receive an indication from the service provision component regarding whether confidential information should be forwarded and/or an indication of the detail of information that should be forwarded and is configured to at least partially forward the resource availability information in accordance with the indication.
Example 8 is the communication system of any one of examples 1 to 7, wherein the resource management component is configured to determine the hardware resources taking into account one or more requirements and/or characteristics of the one or more network functions other than the location and the time period in addition to the location and the time period.
Example 9 is the communication system of any one of examples 1 to 8 wherein the resource management component is configured to determine the hardware resources taking into account one or more requirements by the service provision component regarding that the determined hardware resources should allow forwarding of confidential information about the determined hardware resources and/or regarding the detail of information about the determined hardware resources that the determined hardware resources should allow to be forwarded.
Example 10 is the communication system of example 9, wherein the resource management component is configured to determine the hardware resources taking into account whether the one or more network functions are stateful or stateless.
Example 11 is the communication system of any one of examples 1 to 10, wherein the hardware resources comprise at least one of computational resources, network resources and storage resources.
Example 12 is the communication system of any one of examples 1 to 11, wherein the hardware resources are resources of movable devices.
Example 13 is the communication system of example 12, wherein the movable devices are vehicles and the hardware resources are configured to be able to switch between providing functionalities for driving the vehicles and providing network functions.
Example 14 is the communication system of example 12 or 13, wherein the resource information provision component is configured to receive the resource availability information from the mobile devices.
Example 15 is the communication system of any one of examples 1 to 14, wherein the service is at least one of a hot spot radio access, a data streaming service, a user data plane gateway service, and a data caching service.
Example 16 is the communication system of any one of examples 1 to 15, wherein the resource availability information includes, for at least some of the hardware resources, a guarantee that the hardware resources are available at the indicated one or more locations for the one or more indicated time periods and wherein the resource management component is configured to determine hardware resources for the provision of the one or more network functions taking into account wherein, for a hardware resource, the resource availability information includes a guarantee or not.
Example 17 is a method for providing a service as described below with reference to figure 5.

It should be noted that one or more of the features of any of the examples above may be combined with any one of the other examples. In particular, the examples described in context of the device are analogously valid for the method.

According to further embodiments, a computer program and a computer readable medium comprising instructions, which, when executed by a computer, make the computer perform the method of any one of the above examples are provided.

In the following, various examples will be described in more detail.

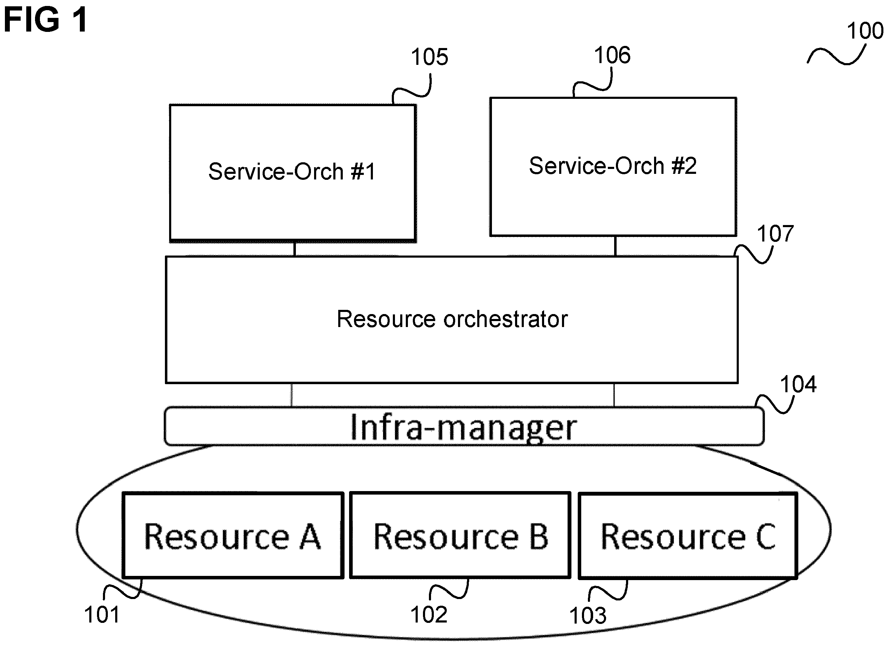

Figure 1 shows a communication system 100, in particular the management framework for communication resources of the communication system.

The communication system 100 comprises communication system resources 101, 102, 103 which are managed by an infrastructure manager or resource manager 104. The communication system hardware resources include computational, storage and/or network resources, e.g. in the form of compute servers, dedicated accelerators for certain tasks (e.g. provided in a cloud), special hardware like programmable metasurfaces, etc.

The resources 101, 102, 103 are used (or "consumed") by resource consumers. In the example of figure 1, service orchestrators (in particular operating as service provision components) 105, 106, e.g. tenants (i.e. communication providers) providing communication services can be seen as the resource consumers. Each service orchestrator is provided with (communication system) functions (in particular network functions) by a respective resource orchestrator (in particular operating as resource managing component) 107 which provides the functions using the communication system resources allocated to the resource consumer. It should be noted that also a tenant 105, 106 together with its resource orchestrator 107 (i.e. the resource orchestrator 107 which provides functions for it) may be seen as resource consumer. Further, alternatively, the resource orchestrator 107 may also be seen as the resource consumer (in the sense that it uses the resources to provide functions or, in other words, allocates the resources for the provision of functions).

So, for example, one or more resource orchestrators 107 manage resources 101, 102, 103, e.g. located in the same region or zone and the resource orchestrator is responsible for certain scope management, e.g., domain, a sort of application, tenant, etc. and each resource 101, 102, 103 is, at a point of time, associated with the resource orchestrator 107 and one of the tenants 105, 106 (or it may also be unallocated).

According to various embodiments, the resources 101, 102, 103 include hardware resources provided by movable (i.e. non-stationary) devices, in particular vehicles (but other movable devices like satellites etc. may also be applicable).

Various embodiments thus in particular provide reusability and resource sharing of commoditized vehicles with computing capability and for example realization of a vehicles-as-a-cloud service applying cloudification to the network edge. So, according to various embodiments, a resource orchestrator (e.g. a MANO (Management and orchestration system) or its administrator (e.g. a telecommunication system operator) can leverage resources on a vehicle which is temporally parked, as if it were a cloudified resource. The vehicles may be vehicles of individuals or may for example belong to a fleet of a car rental company.

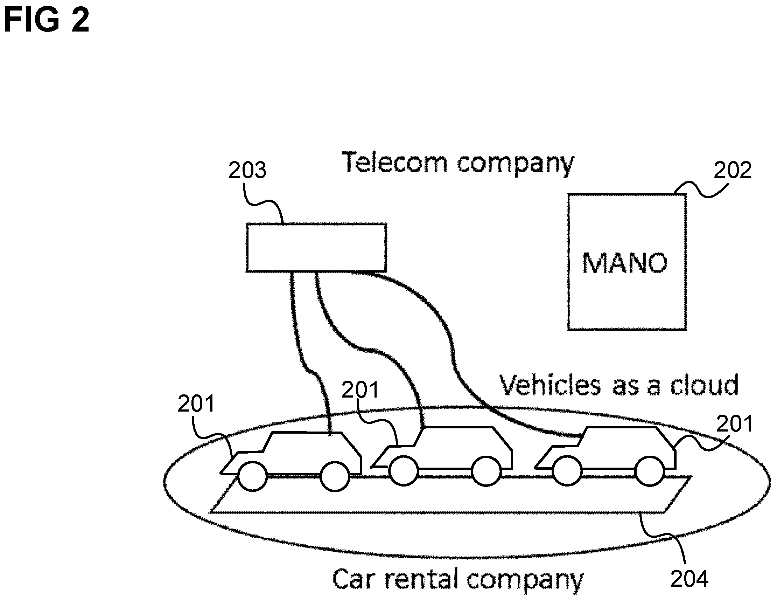

Figure 2 illustrates the usage of vehicles 201 of a car rental company as a cloud of resources by a MANO 202.

The vehicles are for example used by the MANO 202 during the night when they are parked in a garage and connected to an access point 203.

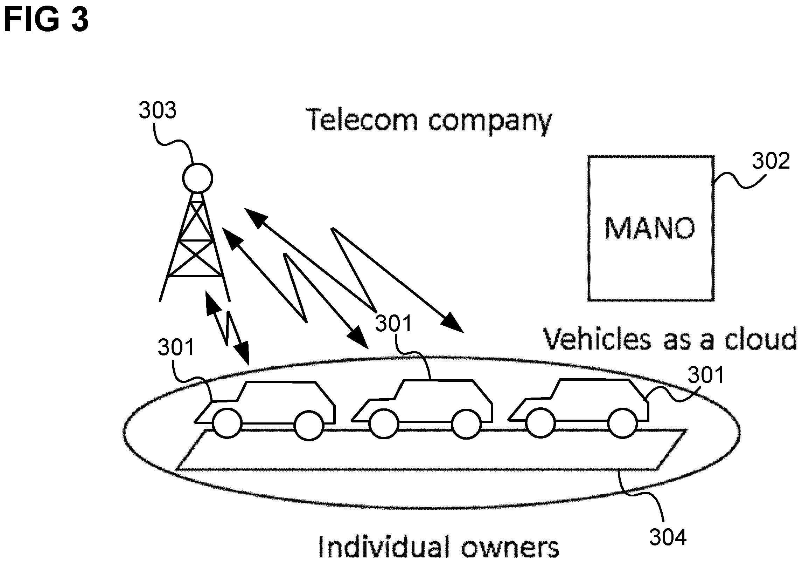

Figure 3 illustrates the usage of vehicles 301 of individual owners as a cloud of resources by a MANO 302.

The vehicles may be used anywhere by the MANO 302 by being connected to a base station 303.

So, according to various embodiments, it is assumed that there is a number of vehicles capable for high-performance computation, e.g. to realize self-driving, and thus have computational, storage and/or communication (i.e. network) hardware resources. These hardware resources can be leveraged as a resource (e.g. for building a cloud) when the vehicles are parked at a specific place (i.e. in a specific geographic region 204, 304) or moved in a swarm (within a specific geographic region) under some specific conditions.

Here, the concept of geographic region can be flexible such that rather determining a region and zone beforehand, computation clusters can be composed temporally and (potentially) everywhere, i.e. a geographical grouping may be flexibly determined (e.g. by the respective resource orchestrator 107).

Naturally, resources may dynamically join (i.e. become available) or go away (i.e. become unavailable). So, a resource orchestrator 107 may, when providing resources for a service will have to also take into account requirements (e.g., amount of resources needed) and/or characteristics (e.g., stateless or stateful) of the applications (e.g., network functions) and determine in advance that some resources become unavailable away at a later point in time. For instance, in the case of a stateful application, deploying in particular a stateful application is not suitable for such resources that can become unavailable during the lifetime of the deployed application.

Stateful means that the network function (or application) keeps and has state information used to perform its functionality, e.g., an application that in order to route/forward packets has certain information in its databases which is used to route/forward packets, i.e., routing/forwarding is determined by the information that the application has, not only based on information that is received by the individual packet that is being forwarded. A "stateful" application thus means that the application has some kinds of state and thereby it cannot be easily moved to another resource. If an application is stateful and a communication service relies on it, thus, if the resource that is used to deploy the application goes away, it will impact the availability of the application, and as a consequence, of the communication service that it is providing. So whether an application can be deployed on such a resource needs to consider the availability of the resource as well.

The resource orchestrator 107 may consider placement constraints for network functions to fulfil requirements of services. For example, the resource orchestrator 107 may not deploy a network function using one or more vehicles when the network function is required (for a certain service) to be provided for a longer time period than it can be expected that the resources of the one or more vehicles are available as resources at a certain location (which may also be a larger region such as a block, a car park, etc.) for the resource orchestrator 107.

Since the resources are, in a scenario above, not owned by the administrator of the MANO 202, 302, metadata and identifiers may be exchanged between the resource owners (i.e. the vehicles 201, 301) and (an administrator of) MANO to realize negotiation of usage of the resources.

It should be noted that the service orchestrator 105, 106 and resource orchestrator 107, may not have knowledge about certain information which should be confidential, such as exact location of private vehicles 301 to ensure privacy.

For example, a mechanism is to input the geographic information regarding resources to the resource orchestrator (e.g. a MANO). The MANO may for example embed the resource as virtual resource according to an NFVI (network functions virtualization infrastructure).

Figure 4 illustrates time-varying resource management according to an embodiment.

A vehicle 401 provides one or more hardware resources. From an NFV (network function virtualization) point of view, being provided by the vehicle 201 means that the resources can move, which means that information used for application (including network function) placement can change throughout time.

To support functionality which provides time-varying resource information and metadata, an entity 402 denoted as time-varying resource information manager (in particular operating as resource information provision component) is provided to manage time-varying resource information.

The time-varying resource information manager 402 receives information about the resources provided by the vehicle 401, e.g. via a database 403 or a message queue 408. This information is information about the vehicle and its resources like availability (e.g. how long it will be parked at a certain position), its position, etc.

The time-varying resource information manager 402 provides this information to a resource orchestrator 404 (e.g. corresponding to the resource orchestrator 107 and/or MANO 202, 302) which may maintain a resource data base 405 holding information about available resources including metadata (such as an identifications assigned to the vehicle 401).

Using the resources it may provide a network function 406 for allowing the service orchestrator 407 (e.g. corresponding to one of the service orchestrators 105, 106) to provide a communication service.

For example the resource orchestrator 404 may provide a hot spot using the radio communication capabilities of the vehicle 201 (i.e. the communication service is here the hot spot service). Another example is usage of the vehicle for caching or streaming data, e.g. to provide faster access for users to data in the vehicle's vicinity (i.e. the service may then be provision of certain data). The resources provided by the vehicle may also be used for offloading for any kind of service to reduce the burden on other resources. The resources may thus in particular be used to provide a radio network function or an edge network function where proximity to one or more other users (and thus placement of the network function) is important for the provision of the respective communication service at a certain quality. The resources may also be used to provide a core network function whose placement can also benefit to one or more other users due to their proximity, coverage or required bandwidth capacity, e.g., a user plane function to forward traffic from the radio network at a specific location.

The resource orchestrator 404 uses the information about the resources for matching requirements with time-varying features of resources (to be) provided: the service orchestrator 407 sends application (in particular network function) requirements to the resource orchestrator 404 which performs matching and arrangement, i.e. finds resources matching the requirements and deploys a requested application (in particular network function) using matching resources. The time-varying resource information manager 402 provides the (time-varying) information required for this to the resource orchestrator 404.

The (time-varying) information may for example include one or more of the following information elements:
- Indicator on level of information e.g., whether the information can include GPS information about the vehicle's location every minute.
- Indicator on whether to commit or not (i.e. whether the vehicle (or its owner) commits to have its resources used, e.g. for a certain indicated time)
- (If committed) Determined time-varying information (e.g., when the vehicle will go away, e.g. when the vehicle will pass through a specific point, i.e. leave a certain region).

The time-varying information related to the resources provided by a vehicle may be transmitted from the vehicle. As explained above, it is transmitted to the service orchestrator 407 (e.g. a tenant) via the resource orchestrator 404 (e.g. MANO or MANO administrator). However, its content may differ depending on the interface (i.e. depending on whether it is transmitted via the service orchestrator - resource orchestrator interface or the vehicle - resource orchestrator interface). It should be noted that the information may also be transmitted via a device associated with the vehicle (such as the owner's mobile terminal) to the resource orchestrator 404, i.e. it does not necessarily have to be transmitted by the vehicle itself. The resource orchestrator 404 can take into account how much detailed information the vehicle owner can provide. For instance, some service orchestrators may wish to know detailed information regarding the movement of infrastructure components (i.e., vehicles) so that they can change service operation depending on the position of the infrastructure elements. In order to do that, the resource orchestrator needs to select appropriate infrastructure elements (i.e. hardware resources) such that the vehicle owner (of the selected infrastructure elements) allows the resource orchestrator 404 to expose detail information of e.g., movement or position of the vehicles, i.e. such that the determined hardware resources allow the resource orchestrator 404 forwarding of confidential information and/or information about them with a certain level of detail.

Table 1 shows examples of different levels of information that is transferred

**Table 1**

| **Level** | **Service orchestrator gets** | **Vehicle provides:** | **Resource orchestrator** |
|---|---|---|---|
| #1 | Only abstracted information without confidential data | Only ab stracted information without confidential data | Finds an appropriate matching between a tenant and a vehicle owner |
| #2 | Detail information without confidential data | Detailed information without confidential data | Finds an appropriate matching between a tenant and a vehicle owner |
| #3 | Only abstracted information without confidential data | Only ab stracted information | In addition to the above, masks confidential data |
| #4 | Detail information without confidential data | Detailed information | In addition to the above, masks confidential data |
| #5 | Only abstracted information without confidential data | Detailed information | In addition to the above, abstract information |

Here, detailed information is for example an exact location (e.g. address) of the vehicle, while abstracted information is the location on a higher level. Confidential information may be information like the license plate number, the owner name, etc.

So, information elements are transmitted over the interfaces including time-varying information which include current information (e.g., availability, position where the degree of detail depends on whether the information is abstracted or not). If the vehicle (or its owner) has not committed to the vehicle's resources being used the information may include what is expected in the near future (e.g. how long the vehicle is expected to be at a certain location) but without guarantee.

The resource orchestrator 404 performs masking of information (i.e. removes confidential information) and abstracts information (e.g. translates an address to a larger region).

In summary, according to various embodiments, a communication system is provided as illustrated in figure 5.

Figure 5 shows a communication system 500 according to an embodiment.

The communication system 500 comprises a resource information provision component 501 configured to provide resource availability information including information about one or more locations at which hardware resources are temporarily available and about one or more time periods for which the hardware resources are available at the locations.

The communication system 500 further comprises a service provision component 502 for provision of a service (e.g. a communication service but possibly also a data processing service such as any kind of software application), configured to indicate a requirement for one or more network functions for provision of the service, wherein the requirement comprises a location at which the one or more network functions should be provided and a time period during which the one or more network functions should be provided.

Further, the communication system 500 comprises a resource management component 503 configured to determine, among the hardware resources, hardware resources for the provision of the one or more network functions such that the indicated requirement for the one or more network functions can be fulfilled by providing the one or more network functions using the determined hardware resources and to initiate provision of the one or more network functions using the determined hardware resources.

According to various embodiments, in other words, information about temporal availability of hardware resources is taken into account for provision of a service. This information may be regarded as time-varying information or information about time-varying availability in the sense that a hardware resource may be available at a certain location at a certain time and may then be no longer available or may be available at a different location (e.g. because the vehicle is moved to a different parking garage).

The approach of figure 5 thus considers data processing hardware resources whose availability at certain locations may change throughout time (because they are moving) and thus allows leveraging data processing hardware resources (computational resources, network resources, storage resources) available from mobile infrastructure elements, such as vehicles or other moving objects with data processing hardware resources (e.g., satellites or wearable devices) in a data processing system. Data processing resources hardware may dynamically join or leave a data processing system (e.g. a communication system) such as a cloud. The geographic region in which data processing resources are used can be flexibly defined. For example, a location may be a parking lot, a square, one more streets, etc. depending on where the service provision component (or its operator) wants to provide a certain service. The resource management component determines (i.e. selects) hardware resources (e.g. vehicles) with which the service can be provided at that location for the requried time.

Thus, according to various embodiments, a telecom operator orchestration mechanism is enhanced with methods, mechanisms and interfaces which can enable to leverage data processing system resources on vehicles (provided for functionalities for driving the vehicles, e.g. driver assistance functions) as if they were part of a cloud service, e.g. for a distributed data centre.

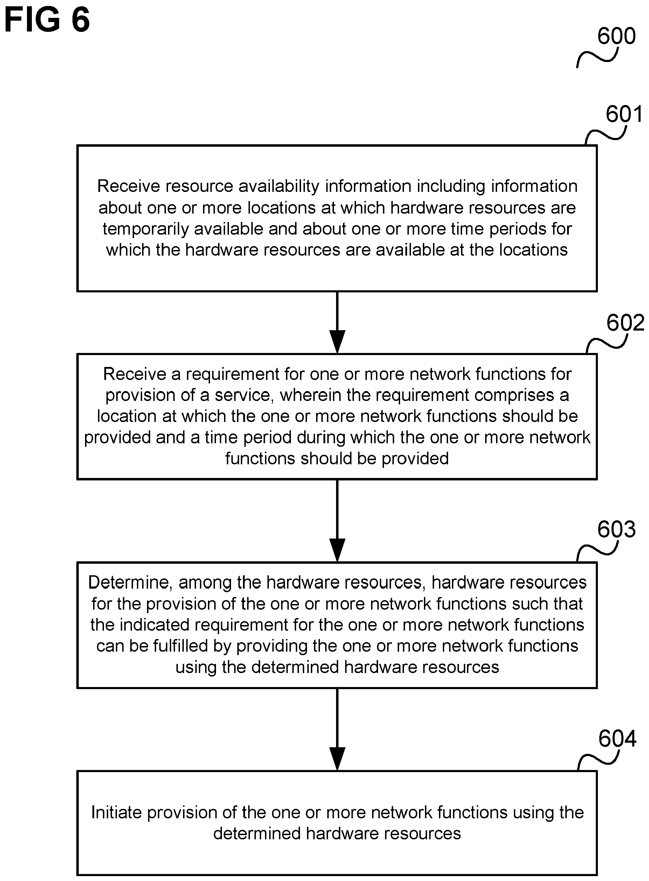

The communication system 500 for example carries out a method as illustrated in figure 6.

Figure 6 shows a flow diagram 600 illustrating a method for providing a service.

In 601, resource availability information including information about one or more locations at which hardware resources are temporarily available and about one or more time periods for which the hardware resources are available at the locations is received.

In 602, a requirement for one or more network functions for provision of the service, wherein the requirement comprises a location at which the one or more network functions should be provided and a time period during which the one or more network functions should be provided is received.

In 603, hardware resources for the provision of the one or more network functions are determined among the hardware resources such that the indicated requirement for the one or more network functions can be fulfilled by providing the one or more network functions using the determined hardware resources and initiating provision of the one or more network functions using the determined hardware resources.

It should be noted that the above (in particular 602, 603) does not strictly have to be performed in the indicated order but may be done at least partially alternatingly or in parallel or in opposite order.

The components of the communication system may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication system comprising:
A resource information provision component configured to provide resource availability information including information about one or more locations at which hardware resources are temporarily available and about one or more time periods for which the hardware resources are available at the locations;
A service provision component for provision of a service, configured to indicate a requirement for one or more network functions for provision of the service, wherein the requirement comprises a location at which the one or more network functions should be provided and a time period during which the one or more network functions should be provided;
A resource management component configured to determine, among the hardware resources, hardware resources for the provision of the one or more network functions such that the indicated requirement for the one or more network functions can be fulfilled by providing the one or more network functions using the determined hardware resources and to initiate provision of the one or more network functions using the determined hardware resources.

2. The communication system of claim 1, wherein the one or more network functions comprise at least one of a core network function, an edge network function and a radio network function.

3. The communication system of claim 1 or 2, wherein the resource management component is configured to at least partially forward the resource availability information to the service provision component and the service provision component is configured to determine the requirement such that it can be fulfilled by providing the one or more network functions using the hardware resources.

4. The communication system of claim 3, wherein the resource management component is configured to remove confidential information from the resource availability information and forward the remainder of the resource availability information to the service provision component.

5. The communication system of claim 3 or 4, wherein the resource management component is configured to at least partially abstract the resource availability information and forward the abstracted resource availability information to the service provision component.

6. The communication system of claim 5, wherein abstracting the resource availability information comprises making the information about the locations less accurate.

7. The communication system of any one of claims 3 to 6, wherein the resource management component is configured to receive an indication from the service provision component regarding whether confidential information should be forwarded and/or an indication of the detail of information that should be forwarded and is configured to at least partially forward the resource availability information in accordance with the indication.

8. The communication system of any one of claims 1 to 7, wherein the resource management component is configured to determine the hardware resources taking into account one or more requirements and/or characteristics of the one or more network functions other than the location and the time period in addition to the location and the time period.

9. The communication system of any one of claims 1 to 8 wherein the resource management component is configured to determine the hardware resources taking into account one or more requirements by the service provision component regarding that the determined hardware resources should allow forwarding of confidential information about the determined hardware resources and/or regarding the detail of information about the determined hardware resources that the determined hardware resources should allow to be forwarded.

10. The communication system of claim 9, wherein the resource management component is configured to determine the hardware resources taking into account whether the one or more network functions are stateful or stateless.

11. The communication system of any one of claims 1 to 10, wherein the hardware resources comprise at least one of computational resources, network resources and storage resources.

12. The communication system of any one of claims 1 to 11, wherein the hardware resources are resources of movable devices.

13. The communication system of claim 12, wherein the movable devices are vehicles and the hardware resources are configured to be able to switch between providing functionalities for driving the vehicles and providing network functions.

14. The communication system of any one of claims 1 to 13, wherein the resource availability information includes, for at least some of the hardware resources, a guarantee that the hardware resources are available at the indicated one or more locations for the one or more indicated time periods and wherein the resource management component is configured to determine hardware resources for the provision of the one or more network functions taking into account wherein, for a hardware resource, the resource availability information includes a guarantee or not.

15. A method for providing a service comprising:
Receiving resource availability information including information about one or more locations at which hardware resources are temporarily available and about one or more time periods for which the hardware resources are available at the locations;
Receiving a requirement for one or more network functions for provision of the service, wherein the requirement comprises a location at which the one or more network functions should be provided and a time period during which the one or more network functions should be provided;
Determining, among the hardware resources, hardware resources for the provision of the one or more network functions such that the indicated requirement for the one or more network functions can be fulfilled by providing the one or more network functions using the determined hardware resources and
Initiating provision of the one or more network functions using the determined hardware resources.

## Amended claims

### Amended claims in accordance with Rule 137(2) EPC.

1. A communication system comprising:
A resource information provision component (402, 501), a service provision component (407, 502) for provision of a service and a resource management component (404, 503), wherein
the resource information provision component (402, 501) is configured to provide resource availability information to the resource management component (404, 503) including information about one or more locations at which hardware resources of movable devices (201, 301, 401) are temporarily available, wherein the hardware resources are configured to be able to switch between providing functionalities for controlling movement of the movable devices (201, 301, 401) and providing network functions, about one or more time periods for which the hardware resources are available at the locations and about whether the movable devices (201, 301, 401) allow usage of the hardware resources they provide;
the service provision component (407, 502) is configured to indicate a requirement for one or more network functions for provision of the service to the resource management component (404, 503), wherein the requirement comprises a location at which the one or more network functions should be provided and a time period during which the one or more network functions should be provided; and
the resource management component (404, 503) is configured to determine, among the hardware resources, hardware resources for the provision of the one or more network functions with which the indicated requirement for the one or more network functions can be fulfilled by providing the one or more network functions using the determined hardware resources by matching the indicated requirement for the one or more network functions to features of the hardware resources taking into account the provided resource availability information and to initiate provision of the one or more network functions using the determined hardware resources.

2. The communication system of claim 1, wherein the one or more network functions comprise at least one of a core network function, an edge network function and a radio network function.

3. The communication system of claim 1 or 2, wherein the resource management component is configured to at least partially forward the resource availability information to the service provision component (407, 502) and the service provision component (407, 502) is configured to determine a requirement as the requirement which can be fulfilled by providing the one or more network functions using the hardware resources.

4. The communication system of claim 3, wherein the resource management component (404, 503) is configured to remove confidential information from the resource availability information and forward the remainder of the resource availability information to the service provision component (407, 502).

5. The communication system of claim 3 or 4, wherein the resource management component (404, 503) is configured to at least partially abstract the resource availability information and forward the abstracted resource availability information to the service provision component (407, 502).

6. The communication system of claim 5, wherein abstracting the resource availability information comprises making the information about the locations less accurate.

7. The communication system of any one of claims 3 to 6, wherein the resource management component (404, 503) is configured to receive an indication from the service provision component (407, 502) regarding the detail of information that should be forwarded and is configured to at least partially forward the resource availability information in accordance with the indication.

8. The communication system of any one of claims 1 to 7 wherein the resource management component (404, 503) is configured to determine the hardware resources taking into account one or more requirements by the service provision component (407, 502) regarding that the determined hardware resources should allow forwarding of confidential information about the determined hardware resources and/or regarding the detail of information about the determined hardware resources that the determined hardware resources should allow to be forwarded.

9. The communication system of claim 8, wherein the resource management component (404, 503) is configured to determine the hardware resources taking into account whether the one or more network functions are stateful or stateless.

10. The communication system of any one of claims 1 to 9, wherein the hardware resources comprise at least one of computational resources, network resources and storage resources.

11. The communication system of any one of claims 1 to 10, wherein the resource availability information includes, for at least some of the hardware resources, a guarantee that the hardware resources are available at the indicated one or more locations for the one or more indicated time periods and wherein the resource management component (404, 503) is configured to determine hardware resources for the provision of the one or more network functions taking into account wherein, for a hardware resource, the resource availability information includes a guarantee or not.

12. A method for providing a service comprising:
Receiving (601) resource availability information including information about one or more locations at which hardware resources of movable devices (201, 301, 401) are temporarily available, wherein the hardware resources are configured to be able to switch between providing functionalities for controlling movement of the movable devices (201, 301, 401) and providing network functions, about one or more time periods for which the hardware resources are available at the locations and about whether the movable devices (201, 301, 401) allow usage of the hardware resources they provide;
Receiving (602) a requirement for one or more network functions for provision of the service, wherein the requirement comprises a location at which the one or
more network functions should be provided and a time period during which the one or more network functions should be provided;
Determining (603), among the hardware resources, hardware resources for the provision of the one or more network functions with which the indicated requirement for the one or more network functions can be fulfilled by matching the indicated requirement for the one or more network functions to features of the hardware resources taking into account the provided resource availability information by providing the one or more network functions using the determined hardware resources and
Initiating (604) provision of the one or more network functions using the determined hardware resources.
